# EUROPÄISCHE PATENTSCHRIFT

(11) **EP 2 754 636 B1**
(45) Veröffentlichungstag und Bekanntmachung des Hinweises auf die Patenterteilung: **04.07.2018**
(21) Anmeldenummer: 14150950.5
(22) Anmeldetag: 13.01.2014
(51) Int. Cl.: B66F 7/28, B66F 17/00, G01G 3/14, G01G 19/02

(54) **Hebebühne und Tragelement für Hebebühne mit Gewichtsmessung**
Lifting platform and supporting element for lifting platforms with weight measurement
Plate-forme de levage et élément de support pour plate-forme de levage avec mesure du poids

(30) Priorität: 14.01.2013 DE 102013100354
(43) Veröffentlichungstag der Anmeldung: 16.07.2014
(73) Patentinhaber: Herrmann AG, 93483 Pösing (DE)
(72) Erfinder: Rothkegel, Roland, 10789 Berlin (DE)
(74) Vertreter: Bittner, Bernhard

(56) Entgegenhaltungen:
- EP-A1- 1 876 136
- DE-U1- 9 312 286

## Beschreibung

Die vorliegende Erfindung bezieht sich auf eine Vorrichtung zum Heben von Kraftfahrzeugen und insbesondere auf eine Hebebühne. Derartige Hebebühnen sind aus dem Stand der Technik seit langem bekannt. Dabei werden mittels hydraulischer oder elektrischer Antriebe Fahrzeuge gehoben, um insbesondere unterhalb der Fahrzeuge Reparaturen durchführen zu können.

In jüngerer Zeit sind auch Hebebühnen bekannt geworden, welche insbesondere während des Hebevorgangs ein Auflagegewicht des darauf befindlichen Kraftfahrzeugs bestimmen. Auch ist es dabei bekannt geworden, dass die Gewichtskräfte an unterschiedlichen Stützstellen, beispielsweise unterhalb der vier Aufnahmepunkte des Kraftfahrzeugs, separat gemessen werden. Auf diese Weise kann beispielsweise festgestellt werden, wenn ein Fahrzeug nicht ordnungsgemäß auf der Hebebühne steht bzw. herabzufallen droht. Eine solche Vorrichtung ist in EP1876136A1 offenbart. Derartige Gewichtsmessvorrichtungen, beispielsweise in Form von Druckmessdosen oder Dehnmessstreifen, arbeiten jedoch dabei im Stand der Technik zum Teil relativ ungenau hinsichtlich der Lasteinleitung und deren Gewichtsanzeige hängt oft davon ab, an welcher genauen Stelle eines entsprechenden Trägers genau das Fahrzeug abgestützt wird.

Der vorliegenden Erfindung liegt daher die Aufgabe zugrunde, Aufnahmeelemente einer Hebebühne für Kraftfahrzeuge zur Verfügung zu stellen, welche eine genauere Gewichtsmessung ermöglichen. Diese Aufgabe wird erfindungsgemäß durch die Gegenstände der unabhängigen Ansprüche gelöst.

Vorteilhafte Ausführungsformen und Weiterbildungen sind Gegenstand der Unteransprüche.

Eine erfindungsgemäße Vorrichtung zum Heben von Kraftfahrzeugen weist ein Tragelement zum Tragen des zu hebenden Kraftfahrzeugs auf, wobei dieses Tragelement wenigstens eine Sensoreinrichtung zum Erfassen einer Gewichtskraft und/oder eines für die Gewichtskraft charakteristischen Wertes des zu hebenden Fahrzeugs aufweist. Weiterhin weist das Tragelement wenigstens zwei an einem Zentralbereich des Tragelements angeordnete Tragarme auf, welche sich ausgehend von dem Zentralbereich in wenigstens zwei unterschiedliche Richtungen erstrecken. Erfindungsgemäß ist an diesen Tragarmen wenigstens je ein Sensorelement zum Erfassen einer Teilgewichtskraft (und/oder eines für diese Teilgewichtskraft charakteristischen Wertes) vorgesehen, wobei eine Kraftermittlungseinrichtung zur Ermittlung der Gewichtskraft die von den wenigstens zwei Sensorelementen ermittelten Teilgewichtskräfte berücksichtigt.

Es wird daher im Gegensatz zum Stand der Technik vorgeschlagen, dass das einzelne Tragelement, welches insbesondere einen bestimmten Teilbereich des Fahrzeugs stützt, wenigstens zwei Sensoren aufweist, die bevorzugt beabstandet zueinander angeordnet sind und die damit punktuell die auftretenden Gewichtskräfte messen. Damit erfolgt die Krafteinleitung in die Sensoreinrichtungen vorteilhaft punktuell und nicht flächig. Auf diese Weise wird eine genauere Messung der auftretenden Gewichtskräfte ermöglicht. Vorteilhaft sind diese beiden Sensorelemente gleichartig ausgebildet. Bevorzugt sind diese wenigstens zwei Sensorelemente unabhängig voneinander angesteuert

Die Summe der auf die Lastpunkte des Trägers oder Tragelemente wirkende Einzellast entsprechen der vom Tragelement getragenen Gesamtlast.

Vorteilhaft wird ein Summenwert oder allgemein ein für eine Summe der von den einzelnen Sensorelementen ausgegebenen Werten charakteristischer Wert berücksichtigt. Mit anderen Worten geben bevorzugt die Sensorelemente wenigstens einen Wert bzw. ein Signal aus, welches für eine auf dieses Sensorelement wirkende Gewichtskraft charakteristisch ist. Vorteilhaft setzt sich damit die von der Sensoreinrichtung gemessene wirkende Kraft aus wenigstens zwei getrennt ermittelten Komponenten zusammen.

Dabei entspricht die Summe der auf die einzelnen Lastpunkte des Tragelements wirkenden Einzellasten der von dem Tragelement getragenen Gesamtlast. Dabei wäre es auch möglich, das eine Prozessoreinrichtung die gemessenen Einzellasten miteinander vergleicht, falls beispielsweise eine dieser gemessenen Einzellasten erheblich von den anderen gemessenen Einzellasten abweicht, könnte dies ein Indiz dafür sein, dass die entsprechende Sensoreinrichtung defekt ist. In diesem Fall kann der von dieser Sensoreinrichtung gemessene Wert bei der Ermittlung der Gesamtlast ausgeklammert werden und beispielsweise anstelle dieses Wertes ein Mittelwert der von den übrigen Sensoreinrichtungen gemessenen Werte verwendet werden.

Bei einer weiteren vorteilhaften Ausführungsform weist die Vorrichtung ein Aufnahmeelement zur Aufnahme des Tragelements auf. Dabei kann es sich bei diesem Aufnahmeelement um ein Hülsenelement handeln, in welches das Tragelement eingesetzt ist. Dabei ist es möglich, dass das Tragelement einen Sockelabschnitt aufweist, mit welchem es in die Hülse eingesetzt wird, es wäre jedoch auch möglich, dass das Tragelement einen Gewindeabschnitt aufweist, mittels dem es in das besagte Hülsenelement eingeschraubt werden kann.

Dieses Hülsenelement kann wiederum an einem Tragarm der Vorrichtung zum Heben von Kraftfahrzeugen angeordnet sein. Dabei ist es möglich, dass, wie an sich aus dem Stand der Technik bekannt, die Hebebühne mehrere derartiger Tragarme aufweist, welche jeweils unterschiedliche Bereiche des zu hebenden Fahrzeugs, beispielsweise die vier Aufnahmepunkte (z.B. die Räder) des Fahrzeuges, stützen. Das hier beschriebene Tragelement stützt jedoch bevorzugt nur einen Bereich eines Fahrzeuges, beispielsweise ein bestimmter Aufnahmepunkt. Damit ist es möglich, dass die Vorrichtung insgesamt mehrere Tragarme aufweist, wobei bevorzugt an jedem dieser Tragarme eines der oben beschriebenen Tragelemente angeordnet ist. Vorteilhaft sind die Tragelemente so angeordnet, dass die auftretenden Kraftflüsse jeweils über die einzelnen Sensorelemente laufen. Bevorzugt werden dabei die Kraftflüsse gleichmäßig über die jeweiligen Sensorelemente verteilt.

Bei einer weiteren vorteilhaften Ausführungsform ist ein Antrieb zum Heben und Senken eines Kraftfahrzeuges vorgesehen. Dabei kann es sich, wie oben erwähnt, um hydraulische, elektrische, gegebenenfalls pneumatische Antriebe und dergleichen handeln. Vorteilhaft ist auch eine Steuerungseinrichtung zum Steuern dieses Antriebs vorgesehen. Dabei kommuniziert bevorzugt diese Steuerungseinrichtung auch mit den einzelnen Sensorelementen bzw. den Tragelementen und steuert bevorzugt den Antrieb zum Heben und Senken des Fahrzeuges auch in Abhängigkeit von von diesen Sensorelementen ausgegebenen Werten. Dabei ist es auch möglich, dass die Steuerung Abweichungen zwischen den Messergebnissen einzelner Tragarme erfasst und beispielsweise, falls eine derartige Abweichung einen gewissen Grenzwert überschreitet, ein Alarmsignal ausgibt oder einen Hebevorgang abbricht.

Vorteilhaft sind zwischen den besagten Tragarmen Leerräume angeordnet. Dabei ist es möglich, dass das Verhältnis eines derartigen Leerraums in radialer Richtung zu dem Zentralbereich in einem Verhältnis liegt, welches zwischen 1:5 und 4:5, bevorzugt zwischen 1:4 und 3:4 und besonders bevorzugt zwischen 1:3 und 2:3, und besonders bevorzugt zwischen 1:3 und 1:2 liegt. Es wäre jedoch auch möglich, dass in diesen Leerräumen zumindest teilweise bzw. abschnittsweise elektrische Komponenten für das Tragelement angeordnet sind.

Bei einer weiteren vorteilhaften Ausführungsform sind die Tragarme des einzelnen Tragelements aus einem statisch entsprechenden Material, z. B. Metall und insbesondere aus Stahl oder bestimmten Kunststoffen gefertigt. Bei einer weiteren vorteilhaften Ausführungsform sind mehrere Tragarme vorgesehen und diese sind besonders bevorzugt in Umfangsrichtung gleichmäßig verteilt.

Bei einer weiteren vorteilhaften Ausführungsform weist das Tragelement eine Energiespeichereinrichtung auf, welche Elemente des Tragelements, wie beispielsweise eine Auswerteelektronik, mit elektrischer Energie versorgt. Auf diese Weise ist es möglich, dass die Tragelemente in einem Stand-Alone Betrieb arbeiten, in dem auch eine Energieversorgung integriert ist. So wäre es beispielsweise möglich, dass die Tragelemente einen Akku aufweisen, der beispielsweise in einem Sockelbereich des Tragelementes angeordnet ist, gegebenenfalls aber auch in einem der oben beschriebenen Zwischenräume zwischen zwei Tragarmen.

Weiterhin kann eine Kalibiereinrichtung vorgesehen sein, welche die gemessenen Werte vor der Inbetriebnahme kalibriert. Dabei wäre es möglich, dass die einzelnen Sensorelemente mit einer genau definierten Kraft beaufschlagt werden und anhand dieser die Kalibrierung der einzelnen Sensorelemente vorgenommen wird. Dabei können in einer Speichereinrichtung dieser Kalibriereinrichtung jeweils für eine derartige Kalibrierung charakteristische Daten abgelegt sein.

Bei einer weiteren vorteilhaften Ausführungsform weisen die Tragelemente auch eine Steuerungs- bzw. Prozessoreinrichtung auf, welche die von den Sensorelementen ausgegebenen Gewichtswerte erfasst und verarbeitet und besonders bevorzugt beispielsweise hieraus Mittelwerte berechnet. Auch ist es möglich, dass die Tragelemente Anzeigeeinrichtungen wie etwa Displays zum Anzeigen einer Gewichtskraft aufweisen. Bei einer weiteren vorteilhaften Ausgestaltung können die Tragelemente auch Identifikationseinrichtungen wie etwa RFID - Tags aufweisen. Auch wäre es möglich, dass die Tragelemente von einer externen Energiequelle mit einer Betriebsspannung versorgt werden, wobei dies beispielsweise induktiv erfolgen kann.

Bei einer weiteren vorteilhaften Ausführungsform weist das Tragelement auch eine Sendeeinrichtung auf, welche erfasste Werte und insbesondere erfasste Gewichtswerte drahtlos ausgeben kann. So ist es möglich, dass die Hebebühne selbst auch eine Empfangseinrichtung aufweist, welche die Signale dieser Sendeeinrichtungen erfassen kann. Vorteilhaft sind diese Sendeeinrichtungen dabei derart ausgestaltet, dass sie mit dem Signal, welches für Gewichtskräfte charakteristisch ist, auch ein Identifikationssignal ausgeben, welches das jeweilige Tragelement eindeutig identifiziert. Auf diese Weise ist es möglich, dass eine Empfangseinrichtung die von den Tragelementen bzw. deren Sensorelementen ausgegebenen Signale jeweils den korrekten Tragelementen zuordnet. Auch ist es denkbar, dass das Tragelement eine Empfangseinrichtung zum insbesondere drahtlosen Empfang von Signalen aufweist.

Vorteilhaft bestehen zwischen den einzelnen Sensorelementen und einer Prozessoreinrichtung des Tragelements jedoch drahtgebundene Verbindungen bzw. Kabelverbindungen. Auf diese Weise ist es auch möglich, dass das hier beschriebene Tragelement auch bei bereits bestehenden Hebebühnen nachgerüstet wird, um auf diese Weise beispielsweise gesetzlichen Bestimmungen gerecht zu werden.

Bei einer weiteren vorteilhaften Ausführungsform weist das Tragelement wenigstens drei und bevorzugt wenigstens vier Tragarme auf, welche sich ausgehend von dem Zentralbereich in unterschiedliche geometrische Richtungen erstrecken. Falls das Tragelement, wie bevorzugt, vier Tragarme aufweist, sind diese Tragarme vorteilhaft bezüglich einander unter einem Winkel von 90° angeordnet. Vorteilhaft ist das Tragelement symmetrisch bzw. assymetrisch ausgebildet, was eine sehr genaue Auswertung der gemessenen Gewichtskräfte ermöglicht.

Bei einer weiteren vorteilhaften Ausführungsform sind die Sensorelemente voneinander beabstandet. Auf diese Weise kann, wie oben erwähnt, eine sehr genaue Bestimmung der Gewichtskräfte insbesondere durch Mittelung über die von den Sensorelementen ausgegebenen Ergebnisse erfolgen.

Bei einer weiteren vorteilhaften Ausführungsform ist an den Tragelementen bzw. an wenigstens einem Tragelement ein Auflageelement angeordnet, welches eine Auflagefläche für das zu hebende Fahrzeug aufweist. So wäre es beispielsweise möglich, dass ein Auflageelement, beispielsweise teilweise aus einem Kunststoff bestehend, oberhalb bzw. auf den Tragarmen angeordnet ist. So könnte beispielsweise dieses Auflageelement kreisrund oder in anderer Form ausgebildet sein und etwa die Gestalt einer Kappe aufweisen. Vorteilhaft weist dieses Auflageelement auch in den Bereichen zwischen den Armen eine entsprechende Auflagefläche auf. Der Bestandteil eines Fahrzeuges, beispielsweise ein Aufnahmepunkt, wird bevorzugt auf dieser Auflagefläche abgestellt. Vorteilhaft ist dabei dieses Auflageelement von den Tragarmen demontierbar und damit bevorzugt auch austauschbar.

Bei einer weiteren vorteilhaften Ausführungsform ist wenigstens ein Sensorelement einer dem zu hebenden Fahrzeug zugewandten Oberfläche des Tragarms zugeordnet. Dies bedeutet, dass bei normaler Anordnung dieses Sensorelement an einer Oberseite der Tragarme angeordnet ist und damit im Wesentlichen direkt von einer Gewichtskraft des zu hebenden Fahrzeugs belastet wird. Vorteilhaft ist das Sensorelement zwischen dem Tragarm und dem Auflageelement angeordnet, insbesondere zwischen einer Oberfläche des Tragarms und einer Unterseite des Auflageelements. Bevorzugt ist dabei dieses Sensorelement in eine Oberfläche des Tragarms eingearbeitet bzw. an dieser Oberfläche angeordnet. Bevorzugt steht dabei dieses Sensorelement wenigstens geringfügig über die besagte Oberfläche des Tragarms hervor,

Bei einer weiteren vorteilhaften Ausführungsform weist wenigstens ein Sensorelement einen Dehnmessstreifen auf. Vorteilhaft sind sämtliche Sensorelemente mit Dehnmessstreifen ausgebildet. Vorteilhaft ist dieser Dehnmessstreifen mittels eines Klebstoffes an dem Tranarm angeordnet. Vorteilhaft ist dieser Dehnmessstreifen radial innerhalb desjenigen Bereiches angeordnet, über den die Kraft auf den jeweiligen Tragarm aufgebracht wird. Es wären jedoch auch andere Sensorelemente denkbar.

Bei einer weiteren vorteilhaften Ausführungsform weist das oben erwähnte Auflageelement einen Metallkörper auf. Insbesondere ist dabei in das oben erwähnte Auflageelement der Metallkörper eingearbeitet bzw. integriert. Dabei ist es möglich, dass dieser Metallkörper im Wesentlichen vollständig von dem Auflageelement bzw. dessen Material umschlossen wird. Vorteilhaft handelt es sich bei diesem Metallkörper um eine Stahlscheibe bzw. allgemein Metallscheibe, welche die aufgenommenen Kräfte verteilt. Die Metallscheibe leitet jedoch, wie oben erwähnt, diese Kräfte wieder punktuell über die einzelnen Tragarme und damit auch über die einzelnen Sensorelemente weiter. Vorteilhaft weist das Auflageelement damit eine Kunststoffummantelung, beispielsweise eine Gummiummantelung, auf, welche den erwähnten Metallkörper umgibt.

Bei einer weiteren vorteilhaften Ausführungsform ist das Auflageelement mittels Verbindungseinrichtungen an dem Tragelement befestigbar. Dabei ist es beispielsweise möglich, dass das Auflageelement an dem Tragelement mittels Schraubverbindungen angeschraubt ist. Diese Schraubverbindungen können dabei zwischen dem Auflageelement und den einzelnen Tragarmen bestehen.

Bei einer weiteren vorteilhaften Ausführungsform weist die Vorrichtung wenigstens zwei Tragelemente zum Tragen des zu hebenden Fahrzeugs auf. Vorteilhaft weist die Vorrichtung wenigstens drei und besonders bevorzugt wenigstens vier Tragelemente zum Tragen bzw. Heben des Kraftfahrzeugs auf. Vorteilhaft wird getrennt die auf die wenigstens zwei Tragelemente wirkende Gewichtskraft erfasst und hieraus bevorzugt wiederum das Gesamtgewicht ermittelt. Weiterhin wird jedoch bevorzugt auch eine auf die einzelnen Tragelemente wirkende Gewichtskraft verglichen, wie oben beschrieben.

Bei einer weiteren vorteilhaften Ausführungsform weist die Vorrichtung auch eine Anzeigeeinrichtung auf, welche eine auf die einzelnen Tragelemente wirkende Gewichtskraft anzeigt.

Die vorliegende Erfindung ist weiterhin auf ein Tragelement für eine Vorrichtung zum Heben von Kraftfahrzeugen gerichtet, wobei dieses Tragelement wenigstens eine Sensoreinrichtung zum Erfassen einer Gewichtskraft und/oder eines für diese Gewichtskraft des zu hebenden Fahrzeugs charakteristischen Wertes aufweist. Weiterhin weist das Tragelement wenigstens zwei an einem Zentralbereich des Tragelements angeordnete Tragarme auf, welche sich ausgehend von dem Zentralbereich in wenigstens zwei unterschiedliche Richtungen erstrecken, wobei das Tragelement weiterhin einen Verbindungskörper aufweist, mit dem es mit dem Träger einer Vorrichtung zum Heben von Kraftfahrzeugen verbindbar ist. Erfindungsgemäß ist an diesen Tragarmen wenigstens je ein Sensorelement zum Erfassen einer Teil-gewichtskraft vorgesehen, wobei eine Kraftermittlungseinrichtung zur Ermittlung der Gewichtskraft die von den beiden Sensorelementen ermittelten bzw. gemessenen Teilgewichtskräfte berücksichtigt und wobei die wenigstens zwei Sensorelemente voneinander beabstandet sind.

Vorteilhaft ist das Tragelement selbst ein tragbares Element und kann so an bereits existierenden Hebebühnen nachgerüstet werden. Vorteilhaft liegt eine Masse dieses Tragelements zwischen 300g und 7kg, bevorzugt zwischen 500g und 5kg.

Vorteilhaft sind die Tragarme einteilig mit dem Zentralbereich ausgebildet. Dabei ist es auch denkbar, dass dieser Zentralbereich selbst ein Bestandteil eines Tragarms ist. Vorteilhaft weist das Tragelement auch einen Sockelbereich auf, mit welchem es beispielsweise in eine Aufnahmehülse eingefügt werden kann. Vorteilhaft weist der Tragarm auch einen Aufnahmeraum zur Aufnahme eines Energiespeichermittels, wie insbesondere einer Batterie, auf. Daneben ist es auch möglich, dass der Tragarm einen Stromanschluss aufweist, um eine externe Stromquelle anzuschließen oder um eine Batterie aufzuladen.

Vorteilhaft weist das Tragelement eine symmetrische Gestalt auf. Besonders bevorzugt ist das Tragelement in der oben beschriebenen Weise ausgebildet.

Weitere Vorteile und Ausführungsformen ergeben sich aus den beigefügten Zeichnungen.

Darin zeigen:
- Fig. 1: Eine schematische Darstellung einer Vorrichtung zum Heben von Kraftfahrzeugen;
- Fig. 2a,b: zwei schematische Darstellungen eines Tragelements;
- Fig. 3: eine Darstellung eines Tragelements mit einem Auflageelement; und
- Fig. 4a, 4b: zwei Darstellungen des Unterteils des Auflageelements.

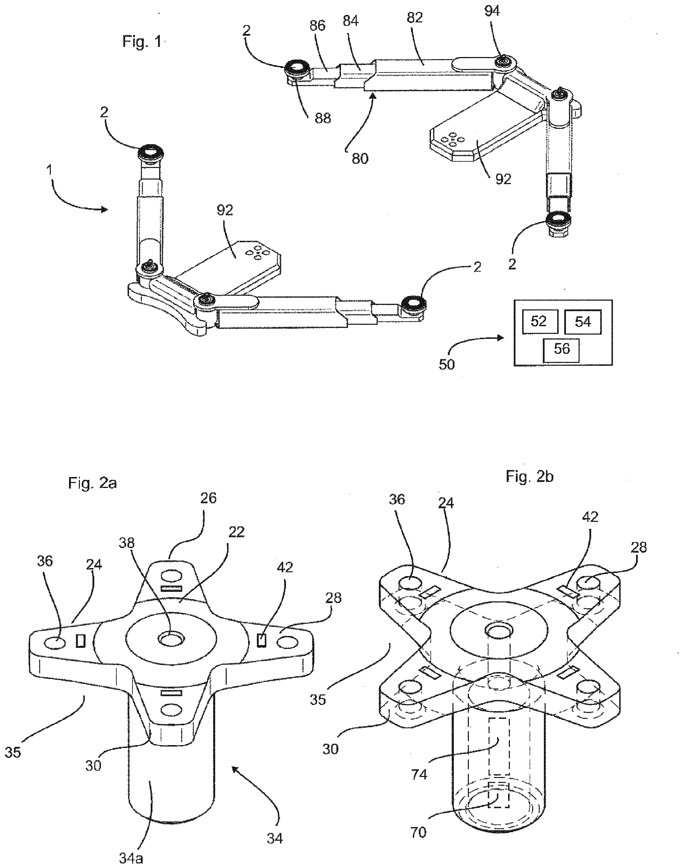

Fig. 1 zeigt eine teilweise Darstellung einer erfindungsgemäßen Vorrichtung 1 zum Heben von Kraftfahrzeugen. Dabei sind zwei Tragplatten 92 vorgesehen, an denen beispielsweise zwei (nicht gezeigte) Säulen angeordnet sein können, welche sich in einer bevorzugt vertikalen Richtung bewegen, um ein (nicht gezeigtes) Kraftfahrzeug zu heben bzw. zu senken. An diesen Grundträgern 92 sind hier insgesamt vier Hauptarme 80 schwenkbar über Gelenke 94 angeordnet. Diese Hauptarme 80 weisen dabei jeweils drei teleskopartig gegeneinander verschiebbare Hauptarmsegmente 82, 84 und 86 auf. An den Enden dieser Arme ist jeweils ein Tragelement über einen (nicht genau gezeigten) Hülsenkörper angeordnet. Auf diesem Tragelement können hier beispielsweise die Aufnahmepunkte des Kraftfahrzeugs aufliegen. Durch die teleskopartige Verschiebbarkeit der Hauptarmsegmente 82, 84 und 86 sowie auch durch die Schwenkbarkeit der Hauptarme kann eine im Wesentlichen beliebige Einstellung auf unterschiedliche Spurweiten oder Radabstände erreicht werden.

Das Bezugszeichen 50 kennzeichnet eine zentrale Steuer- und/oder Auswerteeinheit, welche die von den einzelnen Tragelementen 2 ermittelten Gewichtskräfte auswertet. Diese Steuer- und/oder Auswerteeinheit weist dabei eine Anzeigeeinrichtung 52 auf, welche dem Benutzer die gemessenen Gewichtswerte anzeigt. Daneben ist auch eine Speichereinrichtung 54 vorgesehen, in der bevorzugt Referenzwerte für zu ermittelnde Gewichtswerte abgelegt sein können. Auch kann eine Vergleichseinrichtung 56 vorgesehen sein, welche die gemessenen Gewichtskräfte mit den in der Speichereinrichtung 54 abgelegten Gewichtswerten vergleicht. Die Steuereinheit 50 kann dabei auch einen Antrieb steuern, der ein Heben und Senken des Fahrzeugs bewirkt. Mit den einzelnen Tragelementen 2 kann diese Steuereinheit bevorzugt drahtlos kommunizieren.

Fig. 2a und 2b zeigen ein Tragelement 2 insbesondere für eine erfindungsgemäße Vorrichtung. Dieses Tragelement 2 weist dabei einen Zentralbereich 22 auf, an den hier vier Tragarme 24, 26, 28 und 30 angeordnet sind. Man erkennt, dass sich diese Tragarme radial nach außen jeweils verjüngen. Das Bezugszeichen 35 kennzeichnet einen Zwischenraum zwischen zwei Tragarmen, der hier leer ausgebildet ist. Es wäre jedoch auch denkbar, dass etwa Prozessoreinrichtungen oder Aufnahmemittel für eine Energiespeichereinrichtung, wie eine Batterie, in diesem Zwischenraum 35 angeordnet sind.

Das Bezugszeichen 38 kennzeichnet einen Hohlraum innerhalb des Tragelements, in den ebenfalls gegebenenfalls Energiespeichermittel, wie Batterien aber auch Steuerungskomponenten, angeordnet sein können.

Das Bezugszeichen 34 kennzeichnet einen Sockelbereich, der hier einteilig an dem Tragelement 2 bzw. mit dem Tragelement 2 ausgebildet ist. Dieser Sockelbereich kann dabei etwa ein Außengewinde 34a aufweisen, mittels dem er in eine Aufnahmehülse einschraubbar ist. Durch dieses Einschrauben kann dabei auch eine individuelle Höheneinstellung mehrerer Tragelemente erreicht werden, damit das Fahrzeug gleichmäßig bzw. mit gleichmäßig aufgeteilten Gewichtskräften auf der jeweiligen Hebebühne steht.

Das Bezugszeichen 36 kennzeichnet ein Verbindungsmittel, mit dem beispielsweise ein Auflageelement an das Tragelement 2 angeschraubt werden kann. Auch wäre es denkbar, dass in der Öffnung 38 ein Verbindungsmittel, wie beispielsweise ein Schraubkörper, eingeschraubt wird.

Die Bezugszeichen 42 beziehen sich auf Sensorelemente, die hier an den einzelnen Tragarmen 24, 26, 28 und 30 bzw. deren oberen Oberflächen angeordnet sind. Auf diese Weise sind die einzelnen Sensorelemente getrennt voneinander, jedoch äquidistant zueinander angeordnet. Ein auf dem Tragelement 2 lastendes Gewicht, wie insbesondere ein Kraftfahrzeug, wird seine Kräfte jeweils über die einzelnen Sensorelemente in das Tragelement 2 einleiten und auf diese Weise ist eine sehr präzise punktuelle Erfassung der einzelnen Kräfte und damit auch der Gesamtkraft möglich. Genauer gesagt werden sich unter dem Gewicht des Fahrzeugs die einzelnen Tragarme jeweils geringfügig verformen und diese Verformung wird von den Sensorelementen 42 erfasst.

In Fig. 2b ist gezeigt, dass im Inneren des Sockelbereichs beispielsweise ein Energiespeichermittel 74, wie eine Batterie angeordnet sein kann, sowie eine Prozessoreinrichtung 70, welche die von den einzelnen Sensorelementen 42 ausgegebenen Signale erfasst und hieraus einen Wert ermittelt, der für eine auf das Tragelement lastende Gewichtskraft charakteristisch ist. Bei dieser Prozessoreinrichtung handelt es sich auch um die eingangs beschriebene Kraftermittlungseinrichtung.

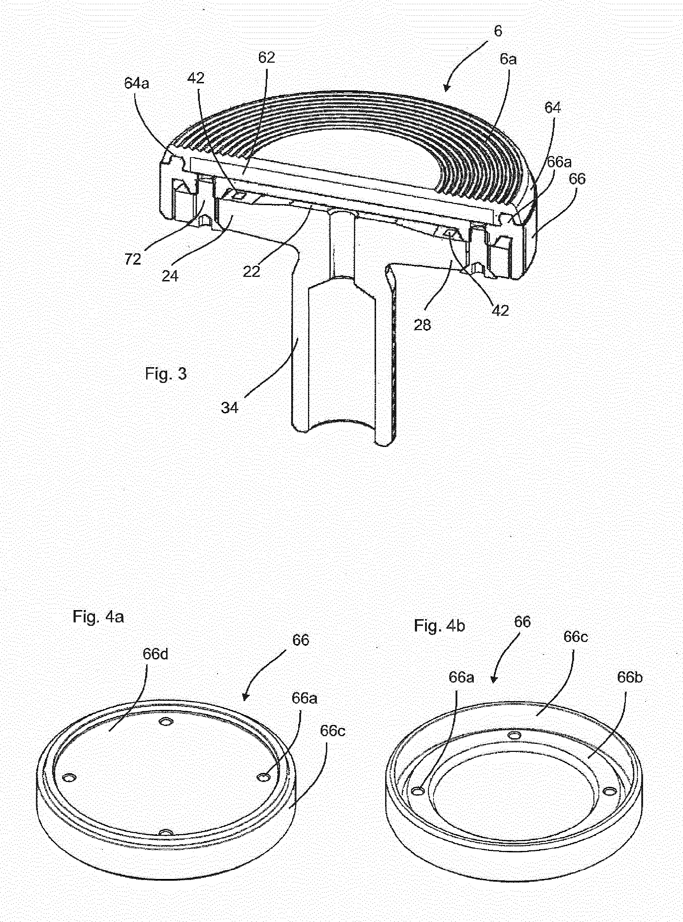

Fig. 3 zeigt eine Schnittdarstellung eines Tragelements 2 mit daran angeordneten Auflageelement 6. Dieses Auflageelement ist hier mehrteilig ausgebildet und weist eine Auflagefläche 6a auf, auf welcher beispielsweise der Aufnahmepunkt eines Kraftfahrzeuges angeordnet sein kann. Das in seiner Gesamtheit mit 64 bezeichnete Oberteil des Auflageelements 6 ist mit einem Unterteil 66 in Umfangsrichtung verbunden. Zu diesem Zweck weist das Unterteil einen umlaufenden Vorsprung 66a auf, der in eine entsprechende Ausnehmung 64a des Oberteils eingreift. Es wäre jedoch auch möglich, dass der Vorsprung an einem Oberteil angeordnet ist und eine entsprechende Ausnehmung an dem Unterteil 66.

Weiterhin ist ein scheibenförmiger Körper 62 vorgesehen, der im Inneren des Auflageelements angeordnet ist. Dieser scheibenförmige Körper dient zum Aufnehmen der Gewichtskraft, die durch das Kraftfahrzeug ausgeübt wird. Das Bezugszeichen 72 kennzeichnet einen Verbindungskörper, wie beispielsweise eine Schraube, mit der das Unterteil 66 des Auflageelements an dem Tragarm 24 angeschraubt ist. Dabei ist erkennbar, dass ein Endabschnitt des Schraubenkörpers 72 noch von der Metallscheibe 62 beabstandet ist.

Gleichwohl wird bei einer Belastung des Auflageelements eine Krafteinleitung in jedem Falle über das Sensorelement 42 erfolgen bzw. das Sensorelement kann eine entsprechende Verformung des Tragarms 24 erfassen. Innerhalb des Sockelsbereichs 34 ist erkennbar eine Ausnehmung ausgebildet, in der beispielsweise eine Batterie angeordnet sein kann. Daneben können auch (nicht gezeigte) Kabelverbindungen zu den einzelnen Sensorelementen 42 führen.

Die Fig. 4a und 4b zeigen zwei Darstellungen des Unterteils 66 des Auflageelements 6. Man erkennt hier die Öffnungen 66a, über welche die Verbindungselemente 72 eingeschraubt sein können. Das Bezugszeichen 66d kennzeichnet eine Ausnehmung des Unterteils 66, in der wiederum der Scheibenkörper 62 einliegen kann. Das Bezugszeichen 66c kennzeichnet einen Umfangsrand des Unterteils 66, der in Umfangsrichtung das Tragelement 2 umgibt. Das Bezugszeichen 66b kennzeichnet einen ringförmigen Abschnitt des Unterteils 66, der jeweils in montiertem Zustand auf den einzelnen Armen 24, 26, 28 und 30 des Tragelements 2 aufliegt.

Als Material für das Auflageelement könnte beispielsweise Polyamid (PA) verwendet werden. Bevorzugt handelt es sich bei dem Material für das Auflageelement um einen glasfaserverstärkten Kunststoff.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Tragelement
- 6: Auflageelement
- 6a: Auflagefläche
- 22: Zentralbereich
- 24. 26. 28, 30: Tragarme
- 35: Zwischenraum
- 34: Sockelbereich
- 34a: Außengewinde
- 36: Verbindungsmittel
- 38: Hohlraum/Öffnung
- 42: Sensorelemente
- 50: Steuer- und/oder Auswerteeinheit
- 52: Anzeigeeinrichtung
- 54: Speichereinrichtung
- 56: Vergleichseinrichtung
- 62: Metallscheibe
- 64: Oberteil
- 64a: Ausnehmung
- 66: Unterteil
- 66a: Vorsprung/Öffnung
- 66b: ringförmiger Abschnitt
- 66c: Umfangsrand
- 66d: Ausnehmung des Unterteils
- 72: Verbindungskörper
- 74: Energiespeichermittel, Batterie
- 80: Hauptarme
- 82, 84, 86: Hauptarmsegmente
- 92: Tragplatten/Grundträger
- 94: Gelenke

## Patentansprüche

1. Vorrichtung zum Heben von Kraftfahrzeugen mit einem Trageelement (2) zum Tragen des zu hebenden Kraftfahrzeugs, wobei dieses Trageelement (2) wenigstens eine Sensoreinrichtung zum Erfassen einer Gewichtskraft des zu hebenden Fahrzeugs aufweist, wobei das Trageelement (2) wenigstens zwei an einem Zentralbereich (22) des Trageelements angeordnete Tragarme (24, 26, 28, 30) aufweist, welche sich ausgehend von dem Zentralbereich in wenigstens zwei unterschiedliche Richtungen erstrecken,
**dadurch gekennzeichnet, dass**
an diesen Tragarmen (24, 26, 28, 30) wenigstens je ein Sensorelement (42) zum Erfassen einer Teil-Gewichtskraft angeordnet ist, wobei eine Kraftermittlungseinrichtung zur Ermittlung der Gewichtskraft die von den wenigstens zwei Sensorelementen ermittelten Teil-Gewichtskräfte berücksichtigt.

2. Vorrichtung nach Anspruch 1,
**dadurch gekennzeichnet, dass**
das Tragelement (2) wenigstens drei und bevorzugt wenigstens vier Tragarme (24, 26, 28, 30) aufweist, welche sich ausgehend von dem Zentralbereich (22) in unterschiedliche geometrische Richtungen erstrecken.

3. Vorrichtung nach wenigstens einem der vorangegangenen Ansprüche,
**dadurch gekennzeichnet, dass**
die Sensorelemente (42) voneinander beabstandet sind.

4. Vorrichtung (1) nach Anspruch 1,
**dadurch gekennzeichnet, dass**
an den Tragelementen ein Auflageelement (6) angeordnet ist, welches eine Auflagefläche (6a) für das zu hebende Fahrzeug aufweist.

5. Vorrichtung (1) nach wenigstens einem der vorangegangenen Ansprüche,
**dadurch gekennzeichnet, dass**
wenigstens ein Sensorelement (42) an einer dem zu hebenden Fahrzeug zugewandten Oberfläche eines Tragarms (24, 26, 28, 30) angeordnet ist.

6. Vorrichtung (1) nach wenigstens einem der vorangegangenen Ansprüche,
**dadurch gekennzeichnet, dass**
wenigstens ein Sensorelement (42) einen Dehnmessstreifen aufweist.

7. Vorrichtung (1), nach Anspruch 4,
**dadurch gekennzeichnet, dass**
in das Auflageelement (6) ein Metallkörper (62) integriert ist.

8. Vorrichtung (1) nach Anspruch 4,
**dadurch gekennzeichnet, dass**
das Auflageelement (6) mittels Verbindungseinrichtungen (72) oder direkt an dem Tragelement (2) befestigbar ist.

9. Vorrichtung (1) nach wenigstens einem der vorangegangenen Ansprüche,
**dadurch gekennzeichnet, dass**
die Vorrichtung wenigstens zwei Tragelemente (2) zum Tragen des zu hebenden Kraftfahrzeugs aufweist.

10. Trageelement (2) für eine Vorrichtung (1) zum Heben von Kraftfahrzeugen, wobei dieses Trageelement (2) wenigstens eine Sensoreinrichtung zum Erfassen eines für die Gewichtskraft des zu hebenden Fahrzeugs charakteristischen Wertes aufweist, wobei das Trageelement (2) wenigstens zwei an einem Zentralbereich (22) des Trageelements angeordnete Tragarme (24, 26, 28, 30) aufweist, welche sich ausgehend von dem Zentralbereich in wenigstens zwei unterschiedliche Richtungen erstrecken und wobei das Trageelement (2) weiterhin einen Verbindungkörper aufweist, mit dem es mit einem Träger der Vorrichtung (1) zum Heben von Kraftfahrzeugen verbindbar ist,
**dadurch gekennzeichnet, dass**
an diesen Tragarmen (24, 26, 28, 30) wenigstens je ein Sensorelement (42) zum Erfassen einer Teil-Gewichtskraft vorgesehen ist, wobei eine Kraftermittlungseinrichtung zur Ermittlung der Gewichtskraft die von den wenigstens zwei Sensorelementen (42) ermittelten Teil-Gewichtskräfte berücksichtigt und wobei die wenigstens zwei Sensorelemente (42) voneinander beabstandet sind.

## Claims

1. Device for lifting motor vehicles, with a supporting element (2) for supporting the motor vehicle to be lifted, wherein this supporting element (2) comprises at least one sensor device for detecting a weight force of the vehicle to be lifted, wherein the supporting element (2) has at least two supporting arms (24, 26, 28, 30) arranged on a central region (22) of the supporting element and extending from the central region in at least two different directions,
**characterised in that**
at least one sensor element (42) is arranged on each of the supporting arms (24, 26, 28, 30) for detecting a partial weight force, wherein a force determination device takes into account the partial weight forces determined by at least two sensor elements for determining the weight force.

2. Device according to claim 1,
**characterised in that**
the supporting element (2) has at least two and preferably at least four supporting arms (24, 26, 28, 30) which extend in different geometric directions starting from the central region (22).

3. Device according to at least one of the preceding claims,
**characterised in that**
the sensor elements (42) are spaced apart from each other.

4. Device (1) according to claim 1,
**characterised in that**
a carrier element (6) is arranged on the supporting elements and has a carrier surface (6a) for the vehicle to be lifted.

5. Device (1) according to at least one of the preceding claims,
**characterised in that**
at least one sensor element (42) is arranged on a surface of a supporting arm (24, 26, 28, 30) facing the vehicle to be lifted.

6. Device (1) according to at least one of the preceding claims,
**characterised in that**
at least one sensor element (42) comprises a strain gauge.

7. Device (1) according to claim 4,
**characterised in that**
a metal body (62) is integrated in the carrier element (6).

8. Device (1) according to claim 4,
**characterised in that**
the carrier element (6) can be attached to the supporting element (2) directly or via connecting devices (72).

9. Device (1) according to at least one of the preceding claims,
**characterised in that**
the device has at least two supporting elements (2) for supporting the motor vehicle to be lifted.

10. Supporting element (2) for a device (1) for lifting motor vehicles, wherein the supporting element (2) has at least one sensor device for detecting a value characteristic of the weight force of the vehicle to be lifted, wherein the supporting element (2) has at least two supporting arms (24, 26, 28, 30) arranged on a central region (22) of the supporting element and extending in at least two different directions starting from the central region, and wherein the supporting element (2) furthermore comprises a connecting body with which it can be connected to a carrier of the device (1) for lifting motor vehicles,
**characterised in that**
at least one sensor element (42) is arranged on each of these supporting arms (24, 26, 28, 30) for detecting a partial weight force, wherein a force determination device takes into account the partial weight forces detected by at least two sensor elements (42) for determining the weight force, and wherein the at least two sensor elements (42) are spaced apart from each other.

## Revendications

1. Dispositif de levage de véhicules automobiles, comprenant un élément porteur (2) destiné à porter le véhicule automobile à lever, dans lequel cet élément porteur (2) comprend au moins un dispositif de détection destiné à détecter un poids du véhicule à lever, dans lequel l'élément porteur (2) comprend au moins deux bras porteurs (24, 26, 28, 30) agencés sur une zone centrale (22) de l'élément porteur, lesquels s'étendent à partir de la zone centrale dans au moins deux directions différentes,
**caractérisé en ce que**
au moins un élément capteur (42) respectif destiné à détecter une partie du poids est agencé sur ces bras porteurs (24, 26, 28, 30), dans lequel un dispositif de détermination de poids destiné à déterminer le poids prend en compte les parties du poids déterminées par lesdits au moins deux éléments capteurs.

2. Dispositif selon la revendication 1,
**caractérisé en ce que**
l'élément porteur (2) comprend au moins trois et de préférence au moins quatre bras porteurs (24, 26, 28, 30), lesquels s'étendent à partir de la zone centrale (22) dans différentes directions géométriques.

3. Dispositif selon au moins l'une des revendications précédentes,
**caractérisé en ce que**
les éléments capteurs (42) sont espacés les uns des autres.

4. Dispositif (1) selon la revendication 1,
**caractérisé en ce que**
un élément d'appui (6), lequel comprend une surface d'appui (6a) pour le véhicule à lever, est agencé sur les éléments porteurs.

5. Dispositif (1) selon au moins l'une des revendications précédentes,
**caractérisé en ce que**
au moins un élément capteur (42) est agencé sur une surface d'un bras porteur (24, 26, 28, 30) tournée vers le véhicule à lever.

6. Dispositif (1) selon au moins l'une des revendications précédentes,
**caractérisé en ce que**
au moins un élément capteur (42) comprend une jauge de contrainte.

7. Dispositif (1) selon la revendication 4,
**caractérisé en ce que**
un corps métallique (62) est intégré dans l'élément d'appui (6).

8. Dispositif (1) selon la revendication 4,
**caractérisé en ce que**
l'élément d'appui (6) peut être fixé par des moyens de systèmes de liaison (72) ou de façon directe sur l'élément porteur (2).

9. Dispositif (1) selon au moins l'une des revendications précédentes,
**caractérisé en ce que**
le dispositif comprend au moins deux éléments porteurs (2) destinés à porter le véhicule automobile à lever.

10. Elément porteur (2) pour un dispositif (1) de levage de véhicules automobiles, dans lequel cet élément porteur (2) comprend au moins un dispositif de détection destiné à détecter une valeur caractéristique du poids du véhicule à lever, dans lequel l'élément porteur (2) comprend au moins deux bras porteurs (24, 26, 28, 30) agencés sur une zone centrale (22) de l'élément porteur, lesquels s'étendent à partir de la zone centrale dans au moins deux directions différentes et dans lequel l'élément porteur (2) comprend en outre un corps de liaison au moyen duquel il peut être relié à un support du dispositif (1) de levage de véhicules automobiles,
**caractérisé en ce que**
au moins un élément capteur (42) respectif destiné à détecter une partie du poids est prévu sur ces bras porteurs (24, 26, 28, 30), dans lequel un système de détermination de poids destiné à déterminer le poids prend en compte les parties du poids déterminées par lesdits au moins deux éléments capteurs (42) et dans lequel lesdits au moins deux éléments capteurs (42) sont espacés les uns des autres.
